# EUROPEAN PATENT APPLICATION

(11) **EP 2 317 375 A1**
(43) Date of publication of application: **04.05.2011**
(21) Application number: 10185394.3
(22) Date of filing: 01.10.2010
(51) Int. Cl.: G02F 1/139, G02F 1/1343

(54) **Pixel structure, active device array substrate, and liquid crystal display panel**

(30) Priority: 09.10.2009 CN 200910308139
(71) Applicant: Chimei InnoLux Corporation, Chu-Nan 350, Taipei (TW)
(72) Inventor: Lin, Ying-Tsung, Chu-Nan 350 (TW); Hung, Wen-Ming, Chu-Nan 350 (TW); Lin, Yu-Cheng, Chu-Nan 350 (TW); Chen, Chueh-Ju, Chu-Nan 350 (TW)
(74) Representative: Gray, John James

(57) **Abstract**

A pixel structure (200) disposed on a substrate (G) having a horizontal direction (X) and a vertical direction (Y) and driven by a scan line (310) and a data line (320) is provided. The pixel structure includes a pixel electrode (210) and an active device (220). The pixel electrode has a first extension portion (212) and a second extension portion (214) connected to the first extension portion, wherein a first included angle of the first extension portion and the horizontal direction is 0 degrees, a second included angle of the second extension portion and the horizontal direction is (360-θ) degrees, the data line is parallel to the first extension portion and the second extension portion, and a plurality of slits are perpendicular to the data line. The pixel electrode is electrically connected to the scan line and the data line via the active device.

## Description

### 1. Technical Field

The disclosure relates to a pixel structure, and an active device array substrate and a liquid crystal display (LCD) panel having the pixel structure. More particularly, the disclosure relates to a pixel structure capable of enhancing the liquid crystal efficiency, and an active device array substrate and a liquid crystal display panel having the pixel structure.

### 2. Description of Related Art

In the present LCD panels, a vertical alignment (VA) technique is generally adopted to tilt the liquid crystal molecules toward a specific direction so that the wide-viewing angle requirement is achieved. The VA technique of liquid crystal display panels mainly includes a multi-domain vertically alignment (MVA) type LCD panel and a pattern vertically alignment (PVA) type LCD panel.

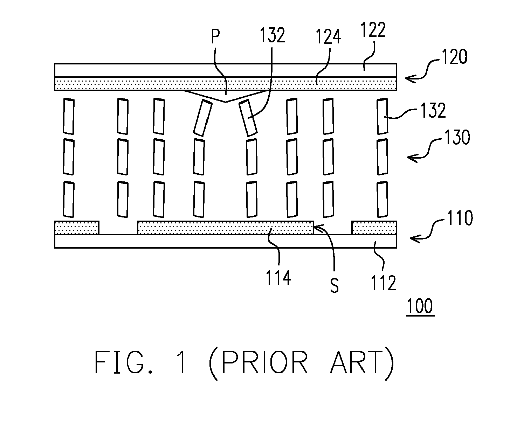

Fig. 1 is a schematic cross-sectional view of a conventional MVA LCD panel. Referring to Fig. 1, a MVA LCD panel 100 includes a thin film transistor (TFT) array substrate 110, a color filter substrate 120, and a liquid crystal layer 130. The TFT array substrate 110 has a device substrate 112 and a pixel electrode 114, and slits S are formed on the pixel electrode 114. The color filter substrate 120 has a filter substrate 122 and an opposite electrode 124, and protrusions P are disposed on the opposite electrode 124.

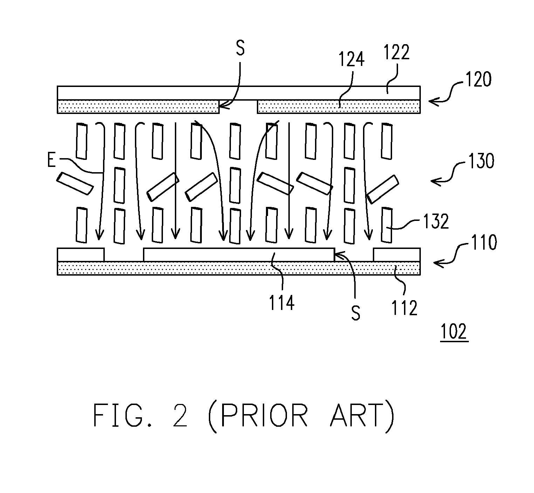

Fig. 2 is a schematic cross-sectional view of a conventional PVA LCD panel. Referring to Fig. 2, a PVA LCD panel 102 includes a TFT array substrate 110, a color filter substrate 120, and a liquid crystal layer 130. The TFT array substrate 110 has a device substrate 112 and a pixel electrode 114, and the pixel electrode 114 is formed with slits S. The color filter substrate 120 has a filter substrate 122 and an opposite electrode 124, and the opposite electrode 124 is also formed with silts S. An electric field E is generated by using the two silts S separately located at the upper side and the bottom side so that the liquid crystal molecules 132 are tilted toward a specific direction.

To obtain a better optical characteristic, either the MVA LCD panel 100 or the PVA LCD panel 102 is required to render the liquid crystal molecules 132 tilt toward a 45-degrees direction during a voltage is applied. More specifically, the slits S are formed on the pixel electrode 114 (or the opposite electrode 124) in the manner of extending in the 45-degrees direction, and the above-mentioned protrusions P are disposed on the opposite electrode 124 in the manner of extending in the 45-degrees direction.

However, the dispositions of the plurality of slits S and the plurality of protrusions P would increase the amount of the dark lines in the aperture region of the pixel structure, which causes the reduction in the light transmission rate. Furthermore, the liquid crystal molecules 132 adjacent to the protrusions P in the MVA LCD panel 100 are pre-tilted, which causes the light leakage problem in the dark state and the reduction in the contrast ratio.

### SUMMARY

Accordingly, the disclosure is directed to a pixel structure which is capable of providing desirable liquid crystal efficiency, desirable light transmission rate, desirable contrast ratio, and desirable liquid crystal response time in the VA mode.

The disclosure is directed to an active device array substrate having a plurality of pixel structures arranged in array which is capable of providing desirable liquid crystal efficiency, desirable light transmission rate, desirable contrast ratio, and desirable liquid crystal response time.

The disclosure is directed to an LCD panel having said active device array substrate capable of displaying images with high quality.

In view of above, the disclosure provides a pixel structure disposed on a substrate having a horizontal direction and a vertical direction, and driven by a scan line and a data line. The pixel structure includes a pixel electrode and an active device. The pixel electrode has a first extension portion and a second extension portion connected to the first extension portion, wherein a first included angle of the first extension portion and the horizontal direction is θ degrees, a second included angle of the second extension portion and the horizontal direction is (360-θ) degrees, the data line is parallel to the first extension portion and the second extension portion, and a plurality of silts are perpendicular to the data line. The pixel electrode is electrically connected to the scan line and the data line via the active device.

The disclosure further provides an active device array substrate including a substrate, a scan line, a data line, and a pixel structure. The substrate has a horizontal direction and a vertical direction. The scan lines and the data lines are disposed on the substrate. The pixel structure is disposed on the substrate, the pixel structure is driven by the scan line and the data line, and the pixel structure includes a pixel electrode and an active device. The pixel electrode has a first extension portion and a second extension portion connected to the first extension portion, wherein a first included angle of the first extension portion and the horizontal direction is θ degrees, a second included angle of the second extension portion and the horizontal direction is (360-θ) degrees, the data line is parallel to the first extension portion and the second extension portion, a plurality of silts are perpendicular to the data line. The pixel electrode is electrically connected to the scan line and the data line via the active device.

The disclosure further provides a liquid crystal display panel including the above-mentioned active device array substrate, a color filter substrate, and a liquid crystal layer. The color filter substrate is opposite to the active device array substrate. The liquid crystal layer is located between the active device array substrate and the color filter substrate.

In order to make the aforementioned and other features and advantages of the disclosure more comprehensible, embodiments accompanying figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

Fig. 1 is a schematic cross-sectional view of a conventional MVA LCD panel.

Fig. 2 is a schematic cross-sectional view of a conventional PVA LCD panel.

Fig. 3 is a schematic top view of a pixel structure according to an embodiment of the disclosure.

Fig. 4A through Fig. 4B are schematic top views of another two pixel structures according to an embodiment of the disclosure.

Fig. 5A is a schematic view of the pixel structure depicted in Fig. 3.

Fig. 5B is a schematic view of a pixel structure of the conventional MVA LCD panel depicted in Fig. 1A.

Fig. 6 is a schematic top view of an active device array substrate according to an embodiment of the disclosure.

Fig. 7 is a schematic view of a liquid crystal display panel according to an embodiment of the disclosure.

### DETAILED DESCRIPTION

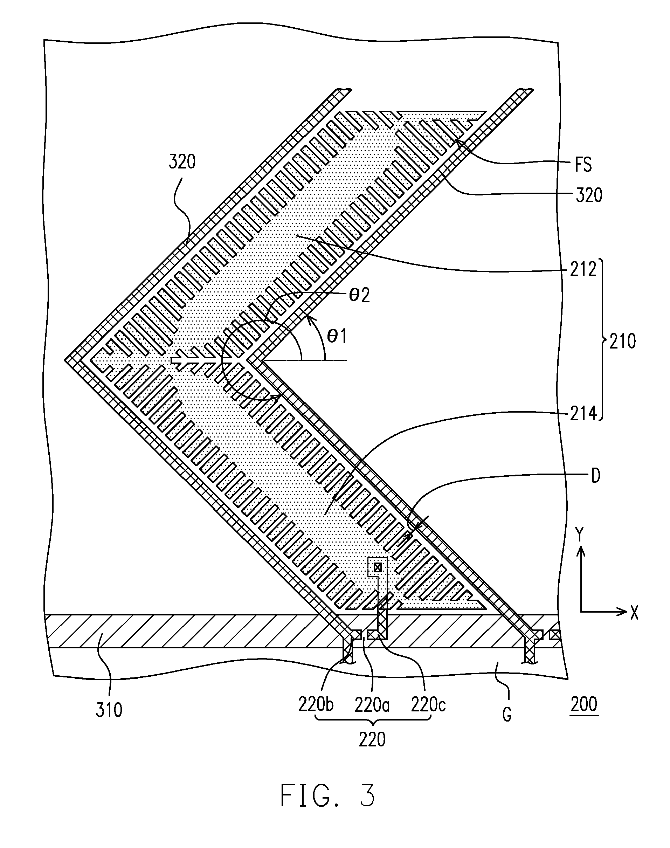

Fig. 3 is a schematic top view of a pixel structure according to an embodiment of the disclosure. Referring to Fig. 3, a pixel structure 200 is disposed on a substrate G having a horizontal direction X and a vertical direction Y, and the pixel structure 200 is driven by a scan line 310 and a data line 320. The pixel structure 200 includes a pixel electrode 210 and an active device 220. The pixel electrode 210 has a first extension portion 212 and a second extension portion 214 connected to the first extension portion 212, wherein a first included angle θ1 of the first extension portion 212 and the horizontal direction X is θ degrees, a second included angle θ2 of the second extension portion 214 and the horizontal direction X is (360-θ) degrees, and the data line 320 is parallel to the first extension portion 212 and the second extension portion 214.

The pixel electrode 210 further has a plurality of slits FS that are perpendicular to the data line 320. The silts FS are located at two sides of the first extension portion 212 and two sides of the second extension portion 214, and be separated by a predetermined distance to subsequently align the liquid crystal molecules (not illustrated). In addition, the aforesaid slits FS can be named as micro-slits and constitute a jagged structure or a tooth structure by being formed at two sides of the first extension portion 212 and two sides of the second extension portion 214. The pixel electrode 210 is electrically connected to the scan line 310 and the data line 320 via the active device 220.

In one embodiment, the first included angle θ1 is, for instance, 45 degrees and the second included angle θ2 is, for instance, 315 degrees. Namely, the pixel electrode 210 is formed compliant to the direction to which the liquid crystal molecules are going to tilt (i.e. 45-degrees or 315-degrees). It is also presented that the first extension portion 212 is extended in the 45-degrees direction and the second extension portion 214 is extended in the 315-degrees direction. However, the values of the first included angle θ1 and the second included angle θ2 (i.e. the extending directions of the first extension portion 212 and the second extension portion 214) are not restricted in the disclosure, which can be determined according to the design requirement of the LCD panel. Assuming that the value of θ1 is greater than zero and less than 90 degrees, it may be for example in the range 10 to 80 degrees, 30 to 60 degrees or 40 to 50 degrees. These ranges all include the particular example of 45 degrees which is illustrated in the embodiment.

Furthermore, when the first included angle θ1 is 45 degrees and the second included angle θ2 is 315 degrees, the included angle of the first extension portion 212 and the second extension portion 214 is 90 degrees and the "<" shape pixel structure 200 depicted in Fig. 3 is formed. Nonetheless, the disclosure is not limited thereto. Only if the first included angle θ1 of the first extension portion 212 and the horizontal direction X is θ degrees and the second included angle θ2 of the second extension portion 214 and the horizontal direction X is (360-θ) degrees, the angle formed in the conjunction of the first extension portion 212 and the second extension portion 214 can be any value.

Referring Fig. 3 again, the data line 320 and the pixel electrode 210 are separated by a distance D. A rang of the distance D is, for example, from 3 µm to 10 µm. Specifically, in the pixel structure 200 as shown in Fig. 3, the distance D between the data line 320 and the pixel electrode 210 is served as a main slit to render the liquid crystal molecules tilt in a definite direction. In addition, the value of the electric field used for changing the tilt of the liquid crystal molecules can be changed by modulating the range of the distance D.

It is noted that two sides of the pixel electrode 210 are respectively disposed with the data line 320 in the pixel structure 200 depicted in Fig. 3. The pixel electrode 210 and the data lines 320 at the two sides thereof are used for providing an uniformed electric field for tilting the liquid crystal molecules. Particularly, the pixel electrode 210 has the slits FS that are perpendicular to the data line 320. The electric field generated by the arrangement of the slits FS can facilitate the liquid crystal molecules to tilt so that the response time of the liquid crystal molecules is shortened.

Furthermore, the active device 220 can include a gate 220a, a source 220b, and a drain 220c. The gate 220a is electrically connected to the corresponding scan line 310. The source 220b is electrically connected to the corresponding data line 320. The drain 220c is electrically connected to the corresponding pixel electrode 210. As shown in Fig.3, a portion of the scan line 310 is served as the gate 220a while an independent gate 220a can also be fabricated. In addition, a material of the pixel electrode 210 can be a transparent conductive material such as indium tin oxide (ITO) or indium zinc oxide (IZO).

In view of the above, through the pattern design of the pixel electrode 210 and the arrangement of the data lines 320 at two sides of the pixel electrode 210, the pixel electrode 210 itself is extended in the 45-degrees direction or the 315-degrees direction so that the liquid crystal molecules (not shown) can definitely tilt toward the 45-degrees direction or the 315-degrees direction when the pixel electrode 210 is applied with a voltage. Thereby, desirable liquid crystal efficiency and light transmission rate are achieved.

The aforesaid pixel structure 200 has at least the following characteristics. The first, when compared to the conventional technique which requires to fabricate the slits S extending in the 45 degrees direction in the pixel electrode 114 or the opposite electrode 124, the pixel structure 200 of the disclosure does not require to additionally form the slits S and directly uses the distance D as the main slit so that the amount of the dark lines in the aperture of the pixel structure 200 is reduced to increase the light transmission rate. The second, a direction of an edge electric field in the edge of the pixel electrode 210 is consistent so that a disclination is not formed in the edge of the pixel electrode 210 to increase the light transmission rate. The third, the pixel electrode 210 itself is extended in the direction of 45-degrees or 315-degrees so that the liquid crystal molecules can definitely tilt to 45 degrees or 315 degrees after being applied by the voltage to shorten the response time of the liquid crystal molecules. The fourth, the fabricating steps of the pixel structure 200 are not increased, which is conducive to obtain the pixel structure 200 with high quality (high light transmission rate and reduced light leakage in the dark state) through low manufacturing cost.

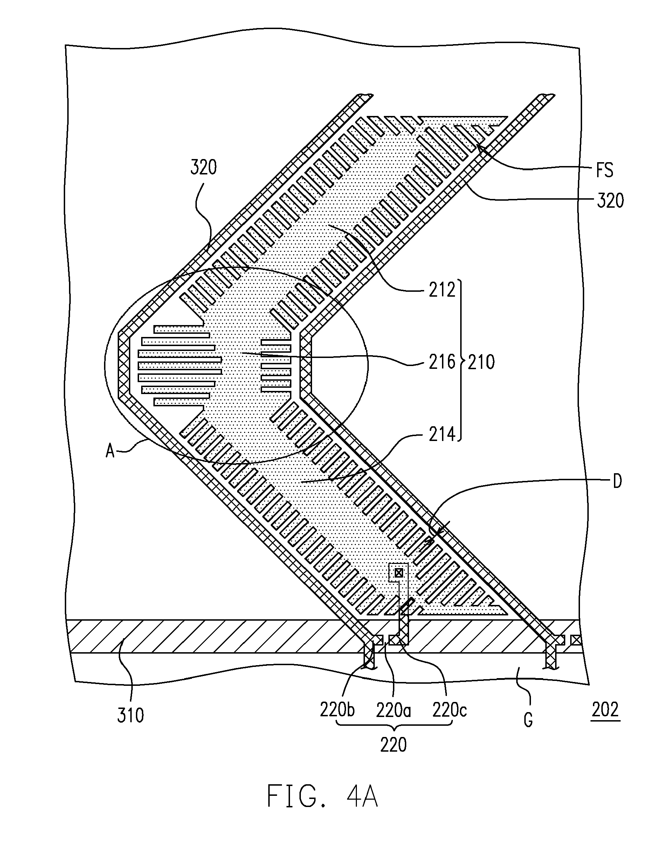

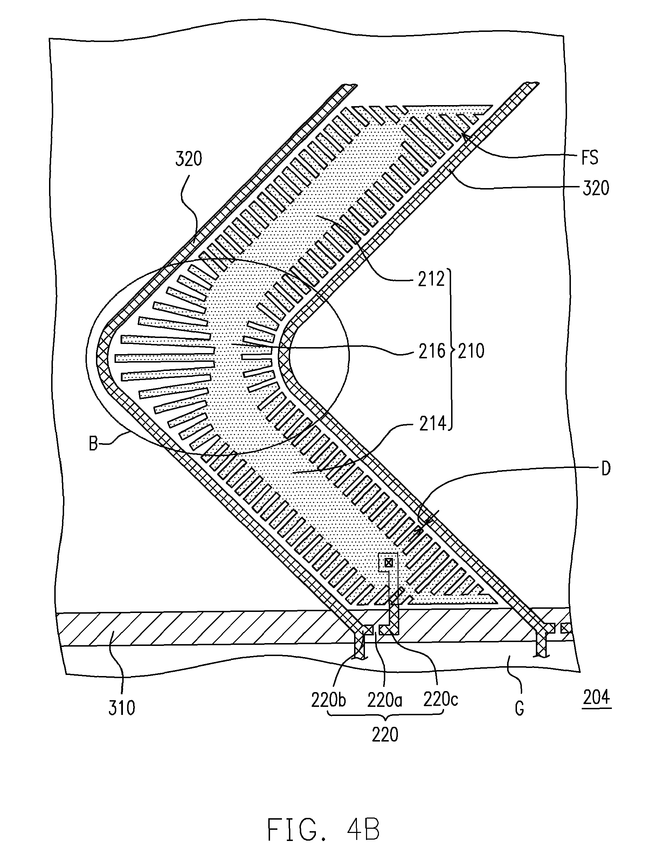

Fig. 4A through Fig. 4B are schematic top views of another two pixel structures according to an embodiment of the disclosure. Referring to Fig. 4A and Fig. 4B simultaneously, pixel structures 202 and 204 are similar to the pixel structure 200 indicated in Fig. 3. Herein, same elements are marked with same reference numbers. The difference thereof lies in that the pixel electrode 210 further includes a third extension portion 216 connecting the first extension portion 212 and the second extension portion 214.

As shown in Fig. 4A, the third extension portion 216 illustrated in the circle A is extended in the vertical direction Y. In addition, as shown in Fig. 4B, the third extension portion 216 illustrated in the circle B is an arc segment. A shape of the third extension portion 216 is not restricted in the disclosure, and persons in the art can change the shape based on different design requirements.

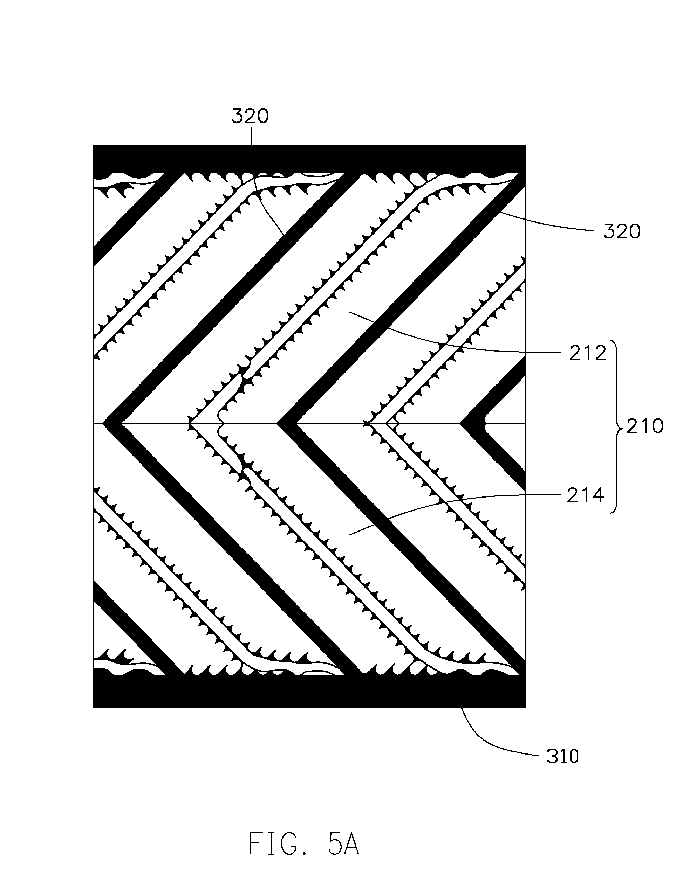

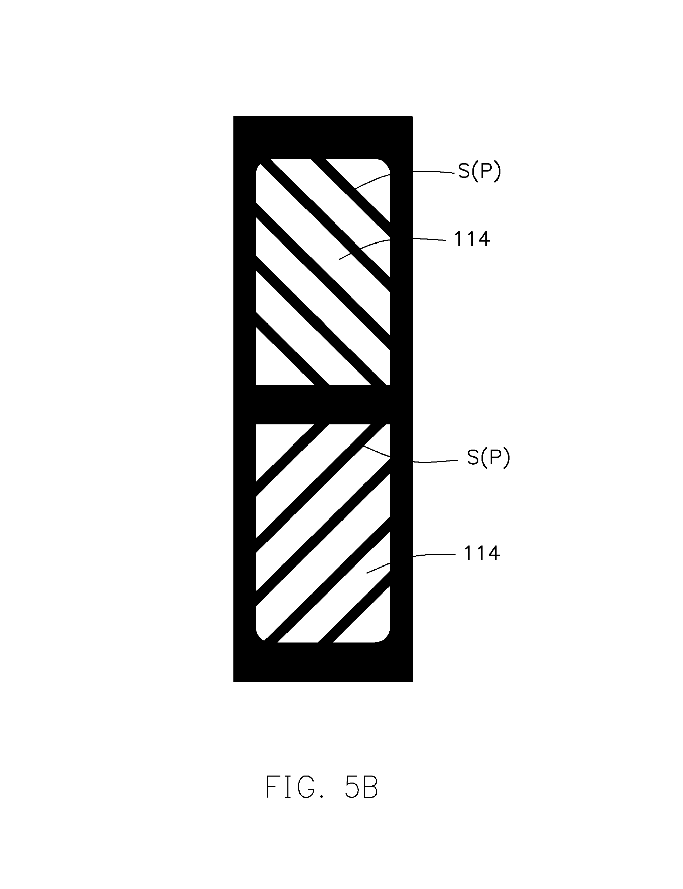

Fig. 5A is a schematic view of the pixel structure depicted in Fig. 3. Fig. 5B is a schematic view of a pixel structure of the conventional MVA LCD panel depicted in Fig. 1A. It is understood that the amount of the dark line in the aperture of the pixel structure 200 is obviously reduced, and the light transmission rate thereof is significantly increased when Fig. 5A is compared to Fig. 5B. When compared to a 32-inch MVA LCD panel 100 with wide viewing angle and high resolution, the liquid crystal efficiency (light transmission rate) of the pixel structure 200 is 10% increased.

Furthermore, the pixel structures 200, 202, and 204 can be driven by an over drive (OD) technique which includes applying a voltage higher than a predetermined voltage in a first frame (not shown) time to make the gray to gray response time of the pixel structures 200, 202, and 204 smaller than 6 ms (millisecond). The gray to gray response time is quite close to the gray to gray response time of the common MVA LCD panel 100.

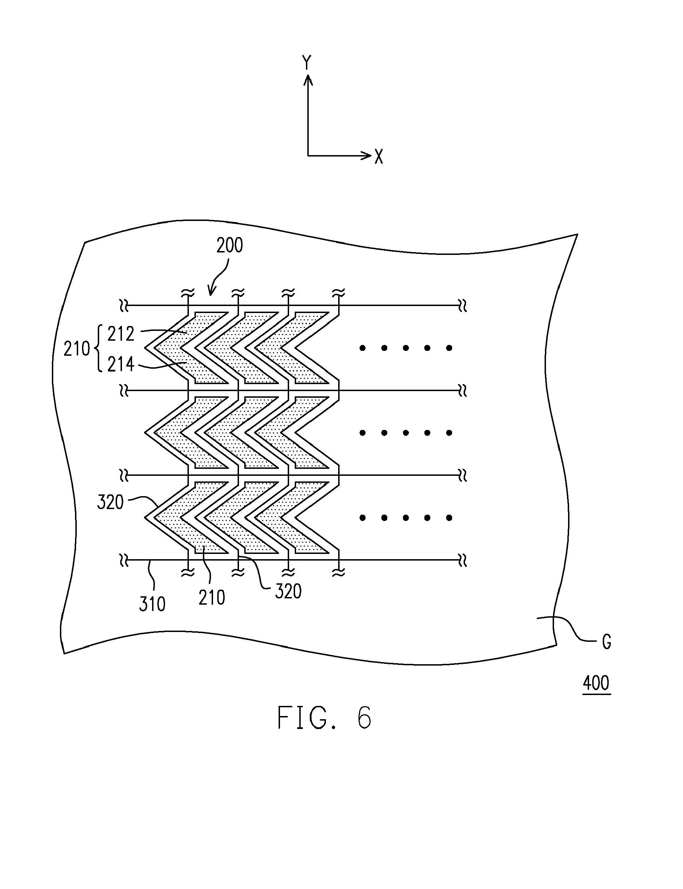

Fig. 6 is a schematic top view of an active device array substrate according to an embodiment of the disclosure. Referring to Fig. 6, the active device array substrate 400 includes a substrate G, scan lines 310, data lines 320, and pixel structures 200. The substrate G has a horizontal direction X and a vertical direction Y. The scan lines 310 and the data lines 320 are disposed on the substrate G. The pixel structures 200 are disposed on the substrate G and driven by the scan lines 310 and the data lines 320.

The pixel structure 200 depicted in Fig. 3 is used in the active device array substrate 400, which is capable of properly driving the liquid crystal molecules to tilt for achieving desirable liquid crystal efficiency, desirable light transmission rate, desirable contrast ratio, and desirable liquid crystal response time. Certainly, the pixel structures 202 and 204 depicted in Fig. 4A and Fig. 4B can be used to form the active device array substrate 400 mentioned above.

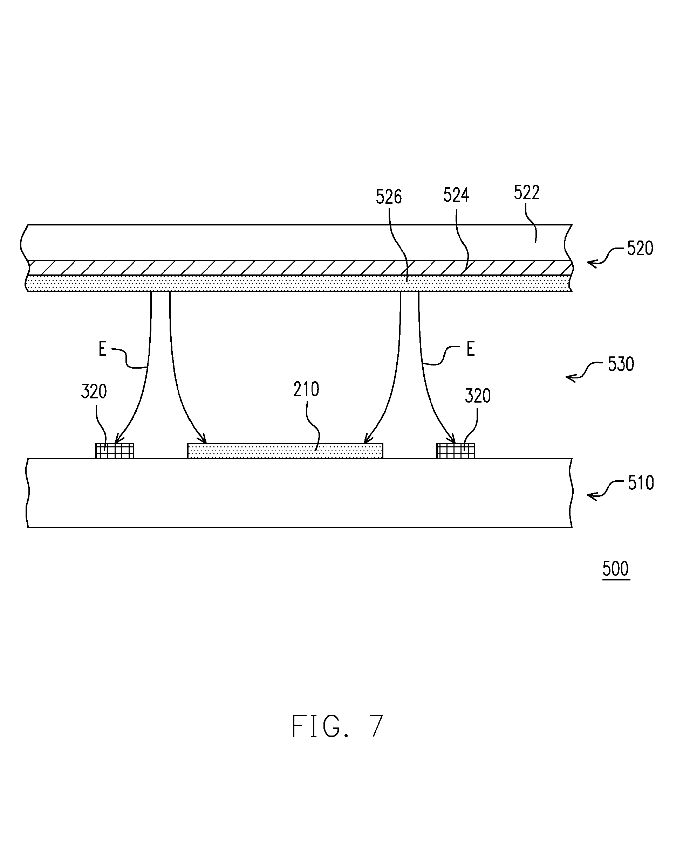

Fig. 7 is a schematic view of a liquid crystal display panel according to an embodiment of the disclosure. An LCD panel 500 includes an array substrate 510, a color filter substrate 520, and a liquid crystal layer 530. The color filter substrate 520 is opposite to the active device array substrate 510. The liquid crystal layer 530 is disposed between the active device array substrate 510 and the color filter substrate 520.

It is noted that the active device array substrate 510 can be the active device array substrate 400 as described above. Thus, the LCD panel 500 is capable of properly driving the liquid crystal molecules to display images having desirable quality.

Referring to Fig. 7, the color filter substrate 520 includes a glass substrate 522, a color filter layer 524, and an opposite electrode 526. The color filter layer 524 is disposed on the glass substrate 522. The opposite electrode 526 is disposed on the color filter layer 524. Particularly, the active device array substrate 510 has the pixel structure 200, 202, or 204, which can render the liquid crystal molecules definitely tilt. Therefore, no protrusion P or slit S is required to be disposed at the side of the color filter substrate 520 such that the light leakage in the dark state is significantly eliminated, and the contrast ratio can be largely improved, e.g. the contrast ratio can be larger than 5,000.

In summary, the pixel structure, the active device array substrate, and the LCD panel of the disclosure has at least the following characteristics.

The pixel electrode is fabricated along the tilt direction of the liquid crystal molecules (such as 45 degrees and 315 degrees) and the data lines are disposed parallel to the two sides of the pixel electrode. The distance between the data line and the pixel electrode are used as the main slit to render the liquid crystal molecules definitely tilt. Therefore, no main slit extending in 45-degrees direction is required to be formed inside the pixel electrode, which facilitates the reduction in the amount of the dark lines and the increase of the light transmission rate. The pixel structure is capable of achieving the functions of high light transmission rate and wide viewing angle and omitting the configurations of the slits or the protrusions in the color filter substrate, which is further conducive to reduce the light leakage in the dark state and improve the contrast ratio.

Although the disclosure has been described with reference to the above embodiments, it will be apparent to one of the ordinary skill in the art that modifications to the described embodiment may be made without departing from the spirit of the disclosure. Accordingly, the scope of the disclosure will be defined by the attached claims not by the above detailed descriptions.

## Claims

1. A pixel structure disposed on a substrate having a horizontal direction and a vertical direction, the pixel structure being driven by a scan line and a data line, and the pixel structure comprising:
a pixel electrode comprising a first extension portion and a second extension portion connected to the first extension portion, wherein a first included angle of the first extension portion and the horizontal direction is θ degrees, a second included angle of the second extension portion and the horizontal direction is (360-θ) degrees, the data line is parallel to the first extension portion and the second extension portion, and a plurality silts are perpendicular to the data line; and
an active device electrically connected to the scan line, the data line, and the pixel electrode.

2. The pixel structure as claimed in claim 1, wherein the first included angle is 45 degrees and the second included angle is 315 degrees.

3. The pixel structure as claimed in claim 1 or 2, wherein the data line and the pixel electrode are separated by a distance.

4. The pixel structure as claimed in claim 3, wherein a range of the distance is from 3 µm to 10 µm.

5. The pixel structure as claimed in claim 1, 2, 3 or 4, wherein two sides of the pixel electrode are respectively configured with the data line.

6. The pixel structure as claimed in any preceding claim, wherein the active device comprises:
a gate electrically connected to the corresponding scan line;
a source electrically connected to the corresponding data line; and
a drain electrically connected to the corresponding pixel electrode.

7. The pixel structure as claimed in any preceding claim, wherein the slits are located at two sides of the first extension portion and two sides of the second extension portion to form a jagged structure.

8. The pixel structure as claimed in any preceding claim, wherein the pixel electrode further comprises a third extension portion connecting the first extension portion and the second extension portion.

9. An active device array substrate, comprising:
a substrate having a horizontal direction and a vertical direction;
a scan line and a data line disposed on the substrate; and
a pixel structure disposed on the substrate, the pixel structure being driven by the scan line and the data line, and the pixel structure comprising:
a pixel electrode comprising a first extension portion and a second extension portion connected to the first extension portion, wherein a first included angle of the first extension portion and the horizontal direction is θ degrees, a second included angle of the second extension portion and the horizontal direction is (360-θ) degrees, the data line is parallel to the first extension portion and the second extension portion, and a plurality silts are perpendicular to the data line; and
an active device electrically connected to the scan line, the data line, and the pixel electrode.

10. The active device array substrate as claimed in claim 9, wherein the first included angle is 45 degrees and the second included angle is 315 degrees.

11. The active device array substrate as claimed in claim 9 or 10, wherein the data line and the pixel electrode are separated by a distance.

12. The active device array substrate as claimed in claim 11, wherein a range of the distance is from 3 µm to 10 µm.

13. The active device array substrate as claimed in claim 9, 10 or 11, wherein two sides of the pixel electrode are respectively configured with the data line.

14. The active device array substrate as claimed in any of claims 9 to 12, wherein the active device comprises:
a gate electrically connected to the corresponding scan line;
a source electrically connected to the corresponding data line; and
a drain electrically connected to the corresponding pixel electrode.

15. The active device array substrate as claimed in any of claims 9 to 14, wherein the slits are located at two sides of the first extension portion and two sides of the second extension portion to form a jagged structure.

16. The active device array substrate as claimed in any of claims 9 to 15, wherein the pixel electrode further comprises a third extension portion connecting the first extension portion and the second extension portion.

17. A liquid crystal display panel, comprising:
an active device array substrate comprising a substrate having a horizontal direction and a vertical direction, a data line disposed on the substrate, a scan line disposed on the substrate, and a pixel structure;
a color filter substrate is opposite to the active device array substrate; and
a liquid crystal layer located between the active device array substrate and the color filter substrate;
wherein the pixel structure comprises a pixel electrode, and the pixel electrode comprising:
a first extension portion and a second extension portion connected to the first extension portion, a first included angle of the first extension portion and the horizontal direction is θ degrees, a second included angle of the second extension portion and the horizontal direction is (360-θ) degrees, the data line is parallel to the first extension portion and the second extension portion, and a plurality silts are perpendicular to the data line.

18. The liquid crystal display panel as claimed in claim 17, wherein the first included angle is 45 degrees and the second included angle is 315 degrees.

19. The liquid crystal display panel as claimed in claim 17 or 18, wherein the data line and the pixel electrode are separated by a distance, and a range of the distance is from 3 µm to 10 µm.

20. The liquid crystal display panel as claimed in claim 17, 18 or 19, wherein the pixel electrode further comprises a third extension portion connecting the first extension portion and the second extension portion.
